Europäisches Patentamt

European Patent Office

Office européen des brevets

(11) Numéro de publication: **0 229 536**
A1

## (12) DEMANDE DE BREVET EUROPEEN

(21) Numéro de dépôt: 86400035.1

(22) Date de dépôt: **09.01.86**

(51) Int. Cl.4: **B60V 1/08 , B60V 1/22**

(43) Date de publication de la demande:
**22.07.87 Bulletin 87/30**

(84) Etats contractants désignés:
**DE GB**

(71) Demandeur: **Chaneac, André**

**F-07200 Aubenas (Ardeche)(FR)**

(72) Inventeur: **Chaneac, André**

**F-07200 Aubenas (Ardeche)(FR)**

(74) Mandataire: **Cabinet BERT, DE KERAVENANT
& HERRBURGER
115, Boulevard Haussmann
F-75008 Paris(FR)**

(54) **Véhicule à coussin d'air et à effet de sol.**

(57) Véhicule à effet de sol caractérisé en ce que sa coupe longitudinale a la forme d'une aile à profil épais présentant un bord avant ou bord d'attaque arrondi et une paroi verticale arrière, joignant l'intrados et l'extrados, partagée horizontalement en deux parties sensiblement égales, la partie supérieure comportant la cabine, les passagers, le moteur et le compresseur et la partie inférieure formée par le réservoir (1) d'air sous pression équipé de conduits (2) tous fermés par des vannes (5) commandées par le conducteur du véhicule et servant à le diriger, à l'accélérer ou à le freiner.

fig 1

## "Véhicule à coussin d'air et à effet de sol"

L'invention concerne un véhicule à coussin d'air et à effet de sol comportant une plate-forme constituant un réservoir étanche entre la face supérieure, la face inférieure et les côtés verticaux de cette plate-forme, ce réservoir étanche alimenté par un compresseur, étant pourvu de conduits tous munis de vannes commandées par le conducteur du véhicule et alimentant, d'une part, les vannes de déplacement avant, arrière et latéral et d'autre part, les vannes de sustentation et les vannes de distribution d'air dans la zone du coussin d'air délimitée par la face inférieure de cette plate-forme, par la surface du sol en regard et par des jupes périphériques continues constituées par des rideaux d'air projetés au travers de fentes réglables en écartement et en inclinaison prévues à la périphérie de la face inférieure et aux séparations des compartiments, véhicule à effet de sol, sensiblement rectangulaire caractérisé en ce que sa coupe longitudinale a la forme d'une aile à profil épais présentant un bord avant ou bord d'attaque arrondi et une paroi verticale arrière joignant l'intrados et l'extrados, partagée horizontalement en deux parties sensiblement égales comportant à la partie supérieure la cabine avec les passagers et le fret ainsi que les moteurs entraînant les compresseurs et à la partie inférieure le réservoir d'air sous pression avec ses vannes de sustentation et de distribution d'air dans les compartiments situés sur l'intrados inférieur de l'aile, ses vannes de déplacement avant situées sur la paroi verticale arrière, ses vannes de déplacement arrière situées à l'avant sur la partie supérieure de l'intrados près du bord d'attaque. Au départ et à petite vitesse, le poids du véhicule est tout entier supporté par la pression du coussin d'air, au fur et à mesure de l'augmentation de la vitesse, la portance de l'aile intervient pour soulever la charge du coussin d'air et à grande vitesse, les vannes de sustentation et de distribution étant fermées, la portance de l'aile supporte tout le poids du véhicule grâce à l'amélioration de la portance due à l'effet de sol qui augmente considérablement la charge transportée.

Suivant une autre caractéristique de l'invention, le véhicule comporte pour le diriger, à l'avant sur chaque côté vertical, une aile très courte ou aileron muni d'une dérive, d'un gouvernail de direction et d'un gouvernail de profondeur et à l'arrière, sur la paroi verticale joignant l'intrados et l'extrados, deux caissons près des côtés verticaux droit et gauche, contenant les éléments du train d'atterrissage arrière, à la partie supérieure de cette paroi dans le prolongement de l'extrados un volet droit et un volet gauche comprenant une partie fixe et une partie mobile constituant le gouvernail de profondeur, à la partie inférieure de cette paroi, dans le prolongement de l'intrados un volet droit et un volet gauche comprenant une partie fixe. Ces volets pourront se déplacer et pivoter pour réaliser des volets hypersustentateurs genre Fowler.

Suivant une autre caractéristique de l'invention, le moteur entraîne une soufflante de grand diamètre qui amène l'air comprimé dans le réservoir par un tuyau de gros diamètre, qui répartit cet air grâce à un distributeur mobile et à des volets de répartition commandés par le conducteur du véhicule.

Suivant une autre caractéristique de l'invention, la périphérie de la plate-forme inférieure comporte une continuité de vannes de sustentation réglables en écartement et en inclinaison, dont les longueurs pourront varier. Elles pourront être réglées indépendamment les unes des autres de façon à prendre en compte les variations de charge du véhicule. Elles pourront avoir un côté fixe et l'autre mobile, leurs inclinaisons pourront être réglables. Ces vannes de sustentation se prolongent à l'intérieur du réservoir pour empêcher l'eau d'entrer dans le réservoir en cas de panne du véhicule sur l'eau.

Suivant une autre caractéristique de l'invention, l'aspiration de l'air destiné aux compresseurs se fait sur toute la largeur de l'extrados, par un volet ouvrant mobile en rotation et pouvant se déplacer longitudinalement afin d'équilibrer les variations de charge par la variation du centre de poussée de la portance de l'aile.

Suivant une autre caractéristique de l'invention, le réservoir comportera des bouches antirotation pour compenser l'effet de couple produit par les soufflantes de grand diamètre, les bouches seront horizontales près des extrémités de la plate-forme dans le cas d'une soufflante horizontale et seront verticales sur les côtés verticaux latéraux au niveau de la soufflante, dans le cas d'une soufflante verticale.

Suivant une autre caractéristique de l'invention, l'amélioration de la portance de l'aile se fait, d'une part, grâce à des jets d'air en provenance du réservoir sur l'avant de l'intrados près du bord d'attaque par un grand nombre de petits orifices et, d'autre part, en ouvrant légèrement les vannes de sustentation situées sur la périphérie avant du véhicule pour souffler de l'air en provenance du réservoir sous pression.

Suivant une autre caractéristique de l'invention, des capteurs permettant de mesurer la charge sur les trois roues commandent la mise en route d'une pompe à gros débit afin de répartir le combustible dans les quatre réservoirs situés aux quatre coins de l'appareil afin d'obtenir un bon équilibre des charges.

Suivant une autre caractéristique de l'invention, différents profils d'extrados de l'aile pourront être choisis en particulier comme celui où le profil est plus haut au centre et moins haut sur les côtés latéraux, l'intrados étant le même. On pourra également donner à l'aile un profil d'aile delta, c'est-à-dire que le centre longitudinal sera situé en avant des côtés latéraux ou que l'avant sera plus large que l'arrière.

L'invention est représentée à titre d'exemples non limitatifs sur les dessins ci-joints dans lesquels :

-la figure 1 est une vue en perspective conforme à l'invention,

-la figure 2 est une vue par-dessous montrant les vannes de sustentation et de distribution d'air comprimé,

-la figure 3 est une vue en coupe longitudinale du véhicule montrant la disposition mobile du réservoir ;

-la figure 4 est une vue en coupe d'une vanne de sustentation dont un côté est fixe et l'autre mobile ;

-la figure 5 est une vue en coupe d'une soufflante horizontale montrant les bouches de sortie d'air anti-rotation ;

-la figure 6 est une vue de face du véhicule montrant la disposition des petits orifices et la vanne de sustentation avant pour améliorer la portance de l'aile ;

-la figure 7 est une vue en perspective de la partie arrière de l'aile montrant la disposition des volets ;

-la figure 8 est une vue en coupe de la partie verticale arrière en son milieu et de son agencement ;

-la figure 9 est une vue en plan de la disposition des réservoirs ;

-la figure 10 est une vue en perspective montrant d'autres formes de réalisation de l'aile.

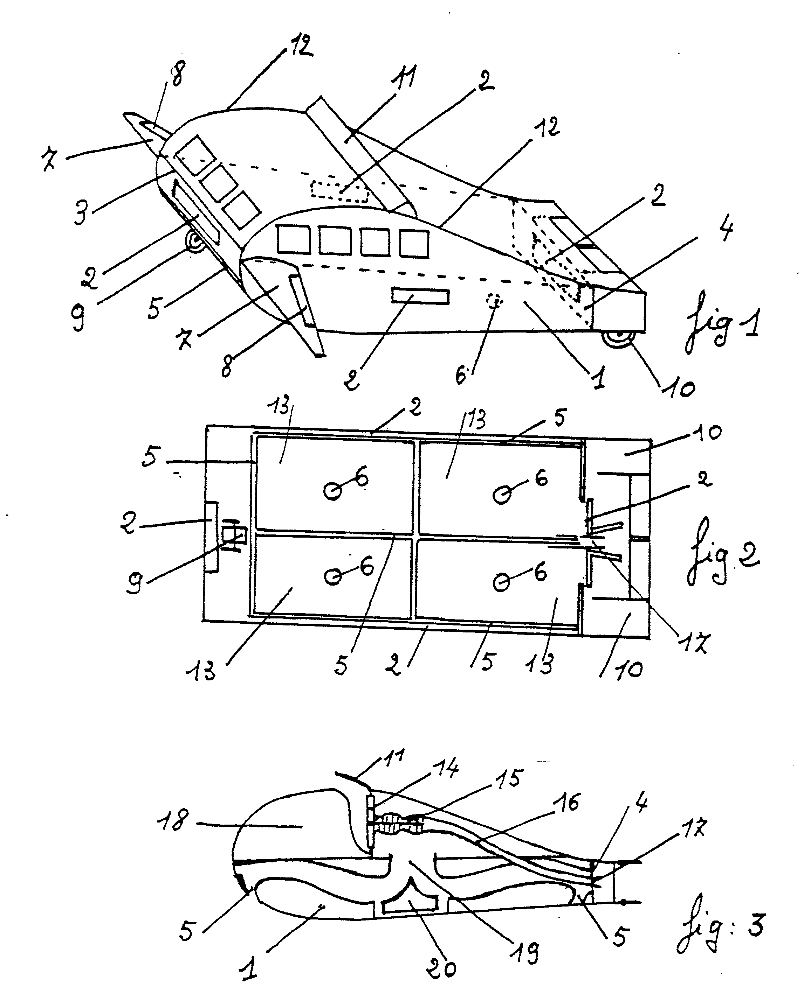

La figure 1 représente en perspective un véhicule conforme à l'invention.

Nous trouvons le réservoir 1 en pointillé. De ce réservoir partent un certain nombre de conduits qui sont fermés par des vannes pouvant être commandées par le conducteur du véhicule, ou par un système automatique.

On distingue :

-les conduits de direction qui aboutissent sur les parois verticales du réservoir. Sur la figure, on remarque les conduits d'avant, arrière et latéral 2.

Ils servent à diriger le véhicule dans sa configuration de véhicule à coussin d'air.

-les conduits de suspension ; ils amènent l'air sous pression aux vannes de sustentation, on distingue les vannes de sustentation 5. Ces vannes sont situées à la périphérie du réservoir et sur les limites des compartiments intérieurs destinés à équilibrer la charge du véhicule, ces vannes créant un rideau d'air épais à haute pression qui emprisonne l'air du coussin d'air.

-les vannes qui alimentent les compartiments intérieurs et qui sont réglables en débit et munies de manodétendeurs pour pouvoir régler la pression d'arrivée d'air dans les compartiments, sur la figure on distingue la vanne 6 d'arrivée d'air en pointillé.

La coupe du profil longitudinal du véhicule a la forme d'une aile avec un bord avant ou bord d'attaque arrondi et une paroi verticale arrière 4 joignant l'extrados et l'intrados de l'aile. Les deux ailerons droit et gauche 7 sont situés sur les côtés latéraux. Ils comportent chacun un gouvernail de profondeur 8, ils pourraient être munis d'un gouvernail de direction et d'une dérive sans pour cela sortir du cadre de l'invention. Les côtés latéraux 12 peuvent également dépasser le profil de l'aile pour guider les filets d'air. Une roue avant 9 mobile en direction commandée par le conducteur du véhicule et deux roues arrière droite et gauche 10 permettent à la fois de diriger l'appareil au sol et un atterrissage à faible vitesse. On remarque également le volet mobile 11 s'ouvrant plus ou moins suivant la vitesse du véhicule et alimentant en air le compresseur et le moteur.

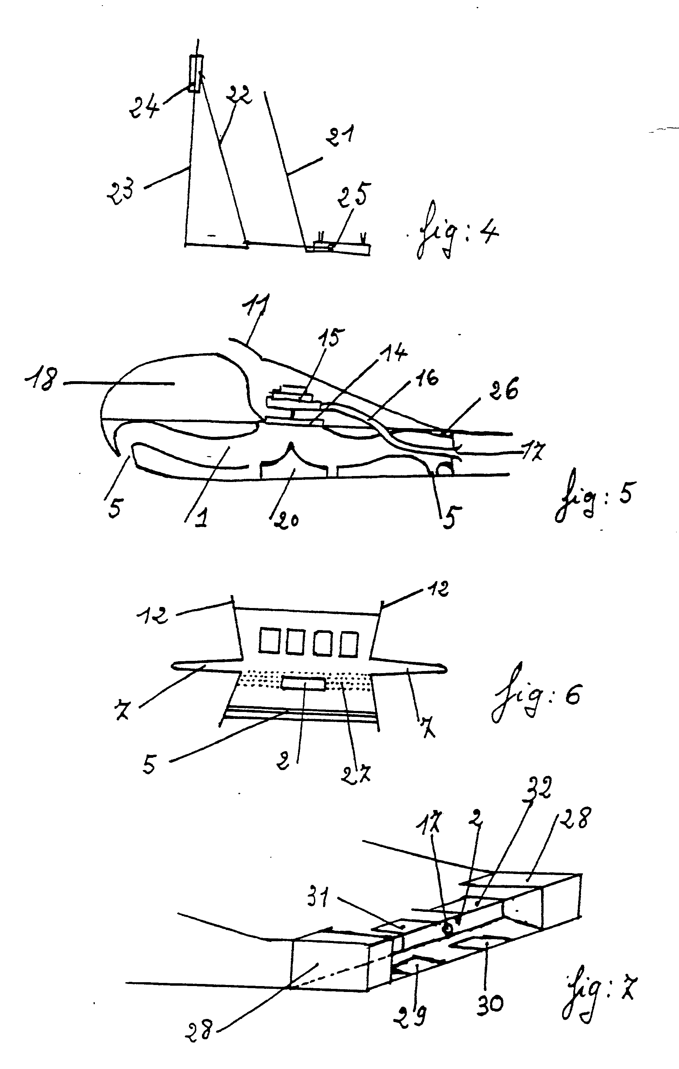

La figure 2 est une vue en plan du dessous du véhicule. Nous trouvons les quatre compartiments 13 alimentés chacun par une vanne de distribution 6 réglable par le conducteur du véhicule, les vannes de suspension 5 situées à la périphérie de la face inférieure de l'intrados limites des quatre compartiments, ainsi que les vannes de direction et de poussée 2 situées à l'avant, à l'arrière et sur les côtés verticaux du réservoir 1. On pourrait mettre un nombre plus grand de compartiments sans pour cela sortir du cadre de l'invention. Les compartiments 13 pourraient être circulaires et ne se joignant pas sans pour cela sortir du cadre de l'invention.

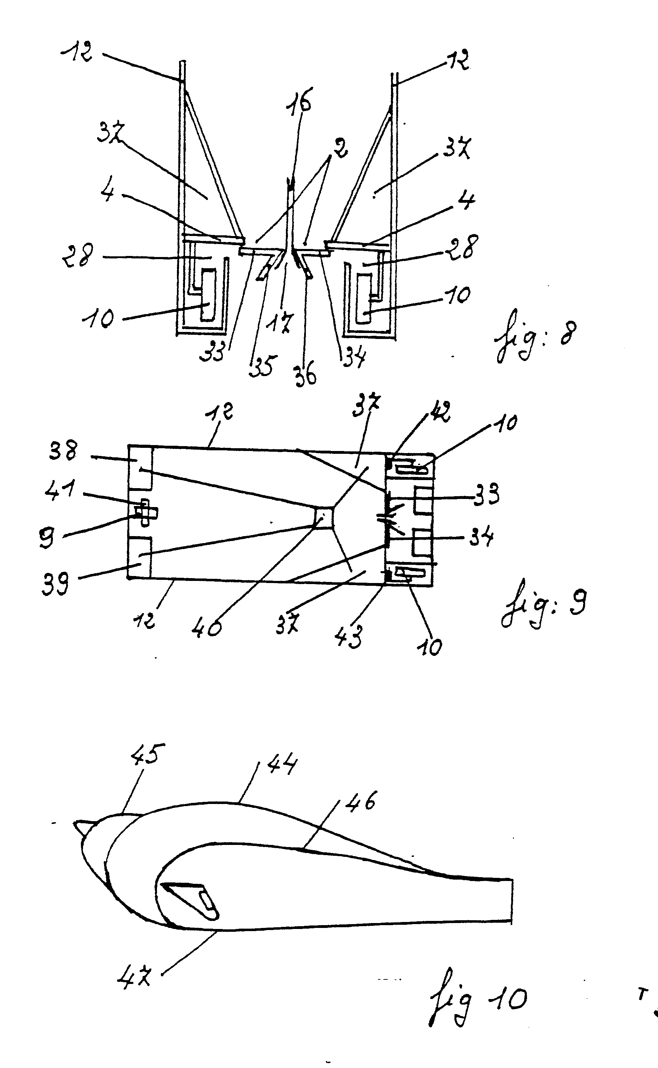

La figure 3 est une vue en coupe longitudinale du véhicule dans le cas où il n'y a qu'un seul moteur et une seule soufflante. Nous retrouvons le réservoir 1 qui occupe la moitié inférieure de l'aile. La partie supérieure comprend la cabine 18 et le compartiment du compresseur 14 et du moteur 15 avec son échappement 16 et sa bouche de sortie 17 située au centre de la paroi verticale 4. L'air comprimé arrive dans le réservoir 1 par la bouche 19 équipée de moyens de régulation, tel que le volet mobile 20, d'autres moyens pourront être employés sans pour cela sortir du cadre de l'invention, et s'échappent du réservoir par les vannes de suspension 5 dont les côtés varient en inclinaison et en écartement, elles se ferment complètement suivant le désir du conducteur. Dans le cas où plusieurs moteurs entraîneraient plusieurs soufflantes, les échappements de chacun de ces moteurs déboucheraient soit dans un seul collecteur qui arrive au centre de la paroi verticale arrière, soit chaque moteur aurait son propre échappement qui arriverait dans ce cas sur la paroi verticale arrière, au-dessus ou au-dessous de la vanne de déplacement.

La figure 4 est une vue en coupe d'une vanne de sustentation 5 dans laquelle le côté 21 est fixe, le côté 22 coulisse le long du côté latéral vertical 23 par un coulisseau 24. Un vérin 25 commandé par le conducteur du véhicule permet de réduire l'épaisseur du jet d'air entre le côté 22 et le côté 21, il permet d'arrêter complètement le jet d'air quand le côté 22 rejoint le côté 21.

La figure 5 est une vue en coupe longitudinale de l'aile. On remarque que l'aile est coupée horizontalement en deux parties à peu près égales, dans la partie inférieure nous avons le réservoir sous pression 1 et dans la partie supérieure la cabine 18 et le compartiment avec son compresseur 14, son moteur 15, son échappement 16 se terminant par la bouche 17. On retrouve comme dans la figure 3 le volet mobile 20 et les vannes de sustentation 5. On remarque, pour compenser le couple de rotation produit par la turbine 14 et le moteur 15, la bouche 26 par où s'échappe l'air comprimé du réservoir. Cette bouche est réglable par le conducteur du véhicule.

La figure 6 est une vue de face avant, où nous remarquons les côtés latéraux verticaux 12 légèrement cintrés vers la fixation des deux ailerons 7. On retrouve les petits orifices avant 27 répartis sur la partie supérieure de l'intrados et soufflant de l'air comprimé en provenance du réservoir 1 afin d'améliorer la portance de l'aile. La vanne 2 est la bouche de freinage, la vanne 5 est la vanne de sustentation avant du véhicule, elle pourra elle aussi rester légèrement entr'ouverte afin d'améliorer la portance de l'aile.

La figure 7 est une vue en perspective de la partie arrière de l'aile montrant la disposition des volets. Nous trouvons les deux caissons 28 près des côtés verticaux contenant les éléments du train d'atterrissage. On remarque la vanne de poussée 2 avec la sortie des gaz d'échappement du moteur 17 avec les volets de profondeur droit et gauche 29 et 30 sur l'intrados et les volets 31 et 32 de profondeur droit et gauche sur l'extrados. En faisant varier ces volets, le conducteur modifiera donc la direction de la poussée de l'air comprimé par le compresseur et donc permettre la variation de la profondeur du véhicule. Les volets 29 et 30, 31 et 32 pourront être manoeuvrés par le conducteur du véhicule soit ensemble, soit séparément.

La figure 8 est une vue en coupe horizontale à la hauteur de l'échappement du moteur. Nous trouvons les côtés verticaux latéraux 12 avec les caissons 28, les roues 10 du train d'atterrissage arrière et la cloison arrière verticale 4 où se trouve la vanne de poussée 2 et l'échappement 16 par la bouche 17. Cette vanne 2 est fermée par deux côtés 33 et 34 qui entourent l'échappement 17 et qui s'ouvrent et se ferment indépendamment l'un de l'autre suivant la volonté du conducteur en coulissant horizontalement, ils se prolongent par des côtés 35 et 36 servant de diffuseurs pour l'échappement de l'air du réservoir. Deux emplacements 37 de chaque côté seront les réservoirs de carburants. Le conducteur pourra ouvrir plus un côté que l'autre pour obtenir une poussée supplémentaire d'un côté et faire pivoter l'appareil du côté qui est moins ouvert, ce qui permettra de diriger le véhicule à droite ou à gauche. Les volets 29, 30, 31 et 32 permettent de le faire monter ou descendre, ce qui en combinaison avec les ailerons avant, permettra au conducteur de réaliser une conduite précise et efficace.

La figure 9 est une vue en plan de la disposition des réservoirs. Nous retrouvons les réservoirs arrière 37 et ceux avant droit 38 et gauche 39. Une pompe 40 à gros débit permet de transvaser le carburant d'un réservoir à l'autre en fonction de la charge sur les roues 9 et 10, charge prise en compte par des capteurs 41, 42 et 43 situés sur chaque roue.

La figure 10 est une vue en perspective d'un véhicule conforme à l'invention, dans laquelle la coupe longitudinale de l'aile est plus épaisse au centre que sur les côtés. Le profil 44 est plus haut que les côtés 45 et 46 alors que l'intrados 47 reste sensiblement le même.

On pourra également sans pour cela sortir du cadre de l'invention, avoir un profil 44 plus long que les côtés 45 et 46 et donner toutes formes aérodynamiques sans pour cela sortir du cadre de l'invention.

On remarque également que l'on pourra obtenir un coussin d'air en prenant, à la place de chaque compartiment, un cercle d'un grand diamètre qui constituera, à lui seul, un coussin d'air. Si nous avons un certain nombre de cercles situés sur l'intrados près du sol, nous pourrons soulever le véhicule, dans ce cas, les vannes de sustentation seront des cercles qui amèneront l'air comprimé du réservoir. Le conducteur pourra fermer l'arrivée de l'arrivée de l'air comprimé et au lieu d'avoir une ligne continue de vannes de sustentation situées à la périphérie et aux limites de chaque compartiment, on aura un certain nombre de cercles de suspension, chacun réalisant son propre coussin d'air, sans pour cela sortir du cadre de l'invention.

**Revendications**

1) Véhicule à effet de sol comportant une plate-forme constituant un réservoir étanche entre la face supérieure, la face inférieure et les côtés verticaux de cette plate-forme, ce réservoir étanche alimenté par un compresseur étant pourvu de conduits tous munis de vannes commandées par le conducteur du véhicule et alimentant, d'une part, les vannes de déplacement avant, arrière et latéral et, d'autre part, les vannes de sustentation et les vannes de distribution d'air dans la zone du coussin d'air délimitée par la face inférieure de cette plate-forme, par la surface du sol en regard et par des jupes périphériques continues constituées par des rideaux d'air projetés au travers de fentes réglables en écartement et en inclinaison prévues à la périphérie de la face inférieure et aux séparations des compartiments, véhicule à effet de sol sensiblement rectangulaire, caractérisé en ce que sa coupe longitudinale a la forme d'une aile à profil épais présentant un bord avant ou bord d'attaque arrondi et une paroi verticale arrière joignant l'intrados et l'extrados, partagée horizontalement en deux parties sensiblement égales comportant à la partie supérieure la cabine avec les passagers et le fret, ainsi que les moteurs entraînant les compresseurs et, à la partie inférieure, le réservoir d'air sous pression avec ses vannes de sustentation et de distribution d'air dans les compartiments situés sur l'intrados inférieur de l'aile, ses vannes de déplacement latéral situées sur les côtés latéraux verticaux, ses vannes de déplacement avant situées sur la paroi verticale arrière, ses vannes de déplacement arrière situées à l'avant sur la partie supérieure de l'intrados près du bord d'attaque ; au départ et à petite vitesse, le poids du véhicule est tout entier supporté par la pression du coussin d'air, au fur et à mesure de l'augmentation de la vitesse, la portance de l'aile inter vient pour soulager la charge du coussin d'air et, à grande vitesse, les vannes de sustentation et de distribution étant fermées, la portance de l'aile supporte tout le poids du véhicule grâce à l'amélioration de la portance due à l'effet de sol qui augmente considérablement la charge transportée.

2) Véhicule conforme à la revendication 1, caractérisé en ce qu'il comporte pour le diriger, à l'avant sur chaque côté vertical, une aile très courte ou aileron muni d'une dérive, d'un gouvernail de direction et d'un gouvernail de profondeur et à l'arrière sur la paroi verticale joignant l'intrados et l'extrados, deux caissons près des côtés verticaux droit et gauche, contenant les éléments du train d'atterrissage arrière, à la partie supérieure de cette paroi dans le prolongement de l'extrados, un volet droit et un volet gauche comprenant une partie fixe et une partie mobile formant le gouvernail de profondeur, et à la partie inférieure de cette paroi, dans le prolongement de l'intrados, un volet droit et un volet gauche comprenant une partie fixe et une partie mobile formant le gouvernail de profondeur ; ces volets pourront se déplacer et pivoter pour réaliser des volets hypersustentateurs genre Fowler.

3) Véhicule conforme aux revendications 1 et 2, caractérisé en ce que le moteur entraîne une soufflante de grand diamètre qui amène l'air comprimé dans le réservoir par un tuyau de gros diamètre, qui répartit cet air grâce à un distributeur mobile et à des volets de répartition commandés par le conducteur du véhicule.

4) Véhicule conforme aux revendications précédentes, caractérisé en ce que la périphérie de la plate-forme inférieure comporte des vannes de sustentation réglables en écartement et en inclinaison, dont les longueurs pourront varier ; elles pourront être réglées indépendamment les unes des autres de façon à prendre en compte les variations de charge du véhicule. Elles pourront avoir un côté fixe et l'autre mobile, leurs inclinaisons pourront être réglables ; ces vannes de sustentation se prolongent à l'intérieur du réservoir pour empêcher l'eau d'entrer dans le réservoir en cas de panne du véhicule sur l'eau.

5) Véhicule conforme aux revendications précédentes, caractérisé en ce que l'aspiration de l'air destiné aux compresseurs se fait sur toute la largeur de l'extrados par un volet ouvrant mobile en rotation et pouvant se déplacer longitudinalement afin d'équilibrer les variations de charge par la variation du centre de poussée de la portance de l'aile.

6) Véhicule conforme aux revendications précédentes, caractérisé en ce que le réservoir comporte des bouches anti-rotation pour compenser le couple de rotation produit par ces turbines, dans le cas de turbine horizontale des bouches seront horizontales près des extrémités de la plate-forme, dans le cas d'une turbine verticale les bouches seront verticales sur les côtés latéraux au niveau de la soufflante afin de s'opposer au couple de rotation du véhicule ; on pourrait aussi mettre deux turbines de sens opposé -ou deux contrarotatives.

7) Véhicule conforme aux revendications précédentes, caractérisé en ce que l'amélioration de la portance de l'aile se fait, d'une part, grâce à des jets d'air en provenance du réservoir sur l'avant de l'intrados près du bord d'attaque par un grand nombre de petits orifices et, d'autre part, en ouvrant légèrement les vannes de sustentation situées sur la périphérie avant du véhicule pour souffler de l'air en provenance du réservoir sous pression.

8) Véhicule conforme aux revendications précédentes, caractérisé en ce que les capteurs permettant de mesurer la charge sur les trois roues commandent la mise en route d'une pompe à gros débit, afin de répartir le combustible dans les quatre réservoirs situés aux quatre coins de l'appareil afin d'obtenir un bon équilibre des charges.

9) Véhicule conforme aux revendications précédentes, caractérisé en ce qu'on peut choisir un profil d'extrados de l'aile plus haut au centre et moins haut que les côtés latéraux, l'intrados étant le même ; on pourra également donner à l'aile un profil d'aile delta c'est-à-dire que le centre longitudinal sera situé en avant des côtés latéraux ou que l'avant sera plus large que l'arrière.

fig 1

fig 2

fig 3

fig: 4

fig: 5

fig: 6

fig: 7

fig. 8

fig. 9

fig 10

Office européen
des brevets

**RAPPORT DE RECHERCHE EUROPEENNE**

Numero de la demande

EP  86  40  0035

## DOCUMENTS CONSIDERES COMMÈ PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 125 987  (CHANEAC)<br>* Revendication 1 * | 1 | B 60 V  1/08<br>B 60 V  1/22 |
| | --- | | |
| Y | FR-A-2 061 519  (BERTIN)<br>* En entier * | 1 | |
| | --- | | |
| A | US-A-3 322 223  (BERTELSEN)<br>* Colonne 4, lignes 66-72; colonne 7, lignes 31-42 * | 1,2 | |
| | --- | | |
| A | DE-A-2 054 536  (PRECITRONIC)<br>* Page 19, ligne 29 - page 20, ligne 3; revendication 1 * | 1,3,4 | |
| | --- | | |
| A | US-A-3 077 321  (DUNHAM)<br>* Colonne 2, lignes 60-64; colonne 4, lignes 19-23; colonne 5, lignes 59-63 * | 1,5,9 | DOMAINES TECHNIQUES RECHERCHES (Int. Cl.4)<br><br>B 60 V |
| | --- | | |
| A | FR-A-1 333 727  (LENOIR)<br>* Page 2, colonne de gauche, lignes 12-42 * | 5 | |
| | --- | | |
| A | US-A-3 126 169  (KUCHER)<br>* Revendication 1 * | 7 | |
| | --- | | |
| A | US-A-4 151 893  (MANTLE)<br>* Revendications 1,3,4 * | 1,2,7 | |
| | ---            -/- | | |

Le present rapport de recherche a été établi pour toutes les revendications

| Lieu de la recherche | Date d'achèvement de la recherche | Examinateur |
|---|---|---|
| LA HAYE | 19-08-1986 | HAUGLUSTAINE H.P.M. |

## DOCUMENTS CONSIDERES COMME PERTINENTS

Page·  2

| Catégorie | Citation du document avec indication, en cas de besoin. des parties pertinentes | Revendication concernée | CLASSEMENT DE LA DEMANDE (Int. Cl.4) |
|---|---|---|---|
| A | US-A-3 177 545  (WARNER) | | |
| | --- | | |
| A | GB-A-1 170 747  (NATIONAL RESEARCH DEVELOPMENT CORP.) | | |
| | ----- | | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 19-08-1986 | HAUGLUSTAINE H.P.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82